(19) Europäisches Patentamt
European Patent Office
Office européen des brevets

(11) **EP 4 356 011 B1**

(12) **EUROPÄISCHE PATENTSCHRIFT**

(45) Veröffentlichungstag und Bekanntmachung des Hinweises auf die Patenterteilung:
**19.02.2025 Patentblatt 2025/08**

(21) Anmeldenummer: **22731261.8**

(22) Anmeldetag: **13.06.2022**

(51) Internationale Patentklassifikation (IPC):
*G01M 3/28* (2006.01)     *F15B 19/00* (2006.01)
*F15B 20/00* (2006.01)

(52) Gemeinsame Patentklassifikation (CPC):
**G01M 3/2876; F15B 19/005;** F15B 20/005;
F15B 2211/6336; F15B 2211/6656; F15B 2211/8646

(86) Internationale Anmeldenummer:
**PCT/EP2022/066019**

(87) Internationale Veröffentlichungsnummer:
**WO 2022/263372 (22.12.2022 Gazette 2022/51)**

(54) **VERFAHREN UND SYSTEM ZUR DIAGNOSE VON ZULUFTSEITIGEN DRUCKSCHWANKUNGEN UND/ODER AUSGANGSSEITIGEN LECKAGEN BEI EINEM GEREGELTEN DOPPELKEGEL-LUFTLEISTUNGSVERSTÄRKER**

METHOD AND SYSTEM FOR DIAGNOSING FEED-AIR PRESSURE FLUCTUATIONS AND/OR LEAKS AT THE OUTLET IN A CONTROLLED DOUBLE-CONE AIR POWER BOOSTER

PROCÉDÉ ET SYSTÈME POUR DIAGNOSTIQUER DES FLUCTUATIONS DE PRESSION D'AIR D'ALIMENTATION ET/OU DES FUITES À LA SORTIE DANS UN SURPRESSEUR D'AIR À DOUBLE CÔNE COMMANDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2021 DE 102021115279**

(43) Veröffentlichungstag der Anmeldung:
**24.04.2024 Patentblatt 2024/17**

(73) Patentinhaber: **Samson Aktiengesellschaft 60314 Frankfurt am Main (DE)**

(72) Erfinder: **KOLBENSCHLAG, Stefan 64291 Darmstadt (DE)**

(74) Vertreter: **Köllner, Malte
Köllner & Partner mbB
Patentanwälte
Vogelweidstraße 8
60596 Frankfurt am Main (DE)**

(56) Entgegenhaltungen:
**US-A- 4 653 523    US-A- 4 825 198**

**Beschreibung**

Gebiet der Erfindung

Die Erfindung betrifft ein Verfahren zur Diagnose von zuluftseitigen Druckschwankungen und/oder ausgangsseitigen Leckagen bei einem geregelten Doppelkegel-Luftleistungsverstärker, sowie entsprechende Systeme und/oder Vorrichtungen. Die vorgenannten Luftleistungsverstärker werden vielfach zur geregelten Druckluftversorgung pneumatischer Antriebe von Prozess-Stellventilen, oder auch anderer Druckluft-Verbraucher, genutzt.

An solche Stellventile werden immer höhere Anforderungen bezüglich ihrer Fähigkeiten, Veränderungen und insbesondere Verschlechterungen ihrer Betriebszustände zu erkennen, gestellt. Dazu zählen insbesondere auch Hinweise auf Unregelmäßigkeiten des Antriebs, z.B. aufgrund von Schwankungen der Druckluftversorgung. Insbesondere sind ungewollte Leckagen von Interesse, da diese auf längere Sicht erhebliche Kosten verursachen und sogar die Sicherheit beeinträchtigen können, da z.B. bestimmte Ventilpositionen ggf. nicht mehr angefahren werden können.

Stand der Technik

Ein elektropneumatisches Steuerungssystem, das eine sekundäre pneumatische Leistungsstufe umfasst, ist beispielsweise in EP 1 769 159 B1 dargestellt. Dabei kommt z.B. ein Doppelkegel-Luftleistungsverstärker zum Einsatz. Diagnosemöglichkeiten, welche das Druckluftsystem und insbesondere Leckagen desselben betreffen, sind nicht vorgesehen.

Aus der Veröffentlichung WO 2018/035181 A1 sind Verfahren und Vorrichtungen zum Prüfen pneumatischer Signalverstärker während des laufenden Betriebs bekannt. Hierdurch können beispielsweise Aussagen über die grundsätzliche Funktionsfähigkeit dieser Geräte gewonnen werden. Aussagen über die Druckluftversorgung und/oder über Leckagen im Druckluftsystem können durch die dort geschilderten Verfahren bzw. Vorrichtungen jedoch nicht gewonnen werden.

Ein Leckagedetektionssystem wird in US 4,157,656 A beschrieben. Dieses erfordert jedoch den Einsatz zusätzlicher Geräte, die ihrerseits einen pneumatischen Verstärker benötigen, um das Ausgabesignal derart zu verstärken, dass es in möglichst eindeutiger Weise von normalen Schwankungen unterschieden werden kann.

US 4,653,523 A beschreibt einen Fluidverstärker, der in einem pneumatischen Wandler verwendet wird, um einen Steuerausgangsdruck als Reaktion auf einen Steuerdruck zu liefern, der als Funktion eines Stromsignals bereitgestellt wird. Der Fluidverstärker enthält ein Ventil, das eine Druckquelle für den Steueranschluss öffnet und auch die Druckzufuhr durch einen Auslasskanal steuert. Das Ventil ist mit einer negativen Rückkopplung ausgestattet, wenn der Abluftgegendruck steigt, um den Betrieb zu stabilisieren und den Verstärker unempfindlicher zu machen. Durch die negative Rückkopplung lässt sich das Ventil leichter steuern und sorgt für einen stabileren Betrieb.

US 4,825,198 A beschreibt ein Verfahren, bei dem zur Dichtheitsprüfung von zwei hintereinander in einer Fluidleitung angeordneten Ventilen der Druckzustand in dem zwischen den Ventilen liegenden Leitungsabschnitt bei geschlossenen Ventilen erfasst wird. Nach Ablauf einer Wartezeit nach dem Schließen der Ventile wird festgestellt, ob der Druck im Leitungsabschnitt oberhalb oder unterhalb einer vorgegebenen Druckschwelle liegt. Daraus wird auf die Dichtheit des einen oder des anderen Ventils geschlossen. Danach wird ein Leitungsweg zum Leitungsabschnitt über das als dicht bewertete Ventil geöffnet und der Leitungsabschnitt entweder entleert oder befüllt. Mittels eines Differenzdrucksensors wird in einer anschließenden Messzeit bestimmt, ob und wie oft der Druck im Leitungsabschnitt die Druckschwelle erreicht oder passiert. Das geprüfte Ventil gilt als dicht bei einmaligem Erreichen oder Passieren der Druckschwelle und als nicht ausreichend dicht, wenn die Druckschwelle nicht oder zweimal innerhalb der Messzeit erreicht worden ist.

Aufgabe

Aufgabe der Erfindung ist es, ein Verfahren sowie ein System anzugeben, das die Möglichkeiten zur Diagnose von Unregelmäßigkeiten, insbesondere Leckagen, im Druckluftsystem eines Doppelkegel-Luftleistungsverstärkers verbessert.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zur Diagnose von zuluftseitigen Druckschwankungen und/oder ausgangsseitigen Leckagen bei einem geregelten Doppelkegel-Luftleistungsverstärker vorgeschlagen. Der Doppelkegel-Luftleistungsverstärker wird von einer Regelung mit einem Soll- und einem Istwert einer Regelgröße geregelt. Das Verfahren umfasst die folgenden Schritte:

- Initiales Ausmessen mindestens eines Abwärtssprungs, wobei das Ausmessen eines Abwärtssprungs Folgendes umfasst:

    1. Abwarten eines Abwärtssprungs des Sollwerts der Regelgröße;
    2. Sicherstellen einer ausschließlich proportionalen Regelung;
    3. Aufnehmen des zeitlichen Verlaufs des Ist-Werts der Regelgröße, beginnend mit dem Abwärtssprung des Sollwerts und endend, wenn innerhalb einer vorgegebenen Messgenauigkeit keine Veränderung des Ist-Werts mehr festgestellt wird, wodurch eine Kurve mit zwei Knickpunkten erhalten wird;
    4. Bestimmen einer Umsteueramplitude und / oder einer Umsteuerdauer, wobei die Umsteueramplitude die Differenz der Ist-Werte der Kurve an den beiden Knickpunkten und die Umsteuerdauer der zeitliche Abstand der beiden Knickpunkte ist.

- Erneutes Ausmessen eines Abwärtssprungs.
- Diagnostizieren eines zuluftseitigen Druckabfalls, wenn die Umsteueramplitude des erneuten Ausmessens um mehr als eine vorgegebene Toleranz kleiner ist als die Umsteueramplitude des initialen Ausmessens; und/oder
- Diagnostizieren eines zuluftseitigen Druckanstiegs, wenn die Umsteueramplitude des erneuten Ausmessens um mehr als eine vorgegebene Toleranz größer ist als die Umsteueramplitude des initialen Ausmessens; und/oder
- Diagnostizieren einer erhöhten ausgangsseitigen Leckage, wenn die Umsteuerdauer des erneuten Ausmessens um mehr als eine vorgegebene Toleranz kürzer ist als die Umsteuerdauer des initialen Ausmessens.

Der Soll- und Ist-Wert der Regelung kann dabei auf den Ausgangsdruck des Luftleistungsverstärkers als Regelgröße bezogen sein, oder beispielsweise auf die Position eines Stellventils oder anderen Verbrauchers. Die Abwärtssprünge können sich aus den Prozessanforderungen ergeben, oder auch z.B. von einem Anwender oder einem Diagnoseprogramm o.ä. gezielt angefordert worden sein. Das Verfahren macht sich zu Nutze, dass bei einem Abwärtssprung des Sollwerts der Luftleistungsverstärker zuerst in den Abluftbetrieb gehen muss, um anschließend, wenn der gewünschte Druck im Druckluftsystem erreicht wird, in den Zuluftbetrieb zu wechseln. Dieser Wechsel ist notwendig, da pneumatische Systeme immer eine gewisse Grundleckage aufweisen, die ausgeglichen werden muss. Für diesen Wechsel wird eine gewisse Zeit, die Umsteuerdauer, benötigt, abhängig von der Leckage. Dabei erfolgt eine weitere Veränderung des Ist-Wertes, die ihre Ursache darin hat, dass sich die Druckverhältnisse im Luftleistungsverstärker im Abluft- und im Zuluftbetrieb unterscheiden. Dies ist die Umsteueramplitude. Für das gewünschte Verhalten bei diesem Umsteuervorgang ist es notwendig, dass die Regelung des Luftleistungsverstärkers als reine Porportionalregelung (P-Regelung) arbeitet. Daher müssen ggf. vorhandene I- oder D-Anteile der Regelung vorher abgeschaltet werden.

Das initiale Ausmessen eines Abwärtssprungs kann sinnvollerweise im Rahmen von Kalibrationsmessungen bei der Inbetriebnahme des Luftleistungsverstärkers bzw. des zugehörigen Reglers erfolgen.

Dieses Verfahren ermöglicht es, Leckagen des an einen Doppelkegel-Luftleistungsverstärker angeschlossenen Verbrauchersystems, beispielsweise eines pneumatischen Stellventilantriebs, sowie Änderung des Versorgungsdruckes zu erkennen. Dadurch können frühzeitig Hinweise zu einer ggf. notwendigen Wartung erhalten werden, wodurch Kosten für zu spät erkannte Wartungserfordernisse gespart werden können. Zusätzliche Sensorik ist für dieses Verfahren nicht erforderlich.

Bei einer bevorzugten Weiterbildung des Verfahrens werden initial mindestens zwei Abwärtssprünge ausgemessen, wobei beide Abwärtssprünge bei unterschiedlichen Druckverhältnissen erfolgen, vorzugsweise einer bei sehr hohem und einer bei sehr niedrigem Druck (z.B. 10 % und 90 % des maximalen Drucks). Dadurch können ggf. vorhandene Abhängigkeiten der Umsteueramplitude und/oder der Umsteuerdauer vom Soll-Wert der Regelgröße bei der Diagnose berücksichtigt werden. Für die bei den mindestens zwei initialen Abwärtssprüngen vorliegenden Druckverhältnisse sind somit Werte für Umsteueramplitude und/oder Umsteuerdauer bekannt, und für andere Druckverhältnisse können sie, beispielsweise aus den weiter unten genannten Formeln oder auch durch Inter- bzw. Extrapolation bestimmt werden.

Die proportionale Regelung arbeitet mit einer Verstärkung $K_P$. Alle vorgesehenen Diagnosen werden genauer, wenn die Verstärkung $K_P$ der proportionalen Regelung für das Ausmessen des Abwärtssprungs auf einen niedrigeren Wert eingestellt wird, insbesondere wenn sie um mindestens 5%, vorzugsweise mindestens 10%, wiederum vorzugsweise mindestens 25%, wiederum vorzugsweise mindestens 50%, wiederum vorzugsweise mindestens 75%, gesenkt wird. Dies führt zu einer Vergrößerung der Umsteueramplitude.

Eine häufige Durchführung des Verfahrens ohne signifikante Beeinträchtigung der Funktion der Anlage, in der der Luftleistungsverstärker eingebaut ist, kann ermöglicht werden, wenn nach dem Ausmessen des Abwärtssprungs die Verstärkung $K_P$ der proportionalen Regelung wieder auf den vor dem Ausmessen des Abwärtssprungs vorhandenen Wert eingestellt wird und/oder, falls die Regelung vor dem Ausmessen des Abwärtssprungs nicht-proportionale Anteile aufwies, diese wieder zugeschaltet werden. Dann erfolgt nur für die Dauer des Abwärtssprungs zu Diagnosezwecken eine ggf. schlechtere Regelung, die im Anschluss wieder verbessert wird.

Für die weitere Auswertung der Ergebnisse des Verfahrens ist es vorteilhaft, wenn als weiterer Schritt ein Datenträger erstellt wird, auf dem die gewonnenen Daten und/oder die Diagnose gespeichert sind.

Die Aufgabe wird außerdem gelöst durch ein System zur Diagnose von zuluftseitigen Druckschwankungen und/oder ausgangsseitigen Leckagen bei einem geregelten Doppelkegel-Luftleistungsverstärker. Dieses System umfasst einen Doppelkegel-Luftleistungsverstärker und einen Regler zum Regeln einer Regelgröße des Doppelkegel-Luftleistungsverstärkers, wobei der Regler so konfiguriert ist, dass er als reiner Proportional-Regler arbeiten kann. Das System hat ferner Mittel zum Aufnehmen eines zeitlichen Verlaufs des Ist-Wertes der Regelgröße, Mittel zum Bestimmen von zeitlichen Abständen und Abständen zwischen Ist-Werten der Regelgröße und Mittel zum Ausgeben einer Diagnose, sowie Mittel, die geeignet sind, ein Verfahren, wie es oben beschrieben wurde, auszuführen.

Der Luftleistungsverstärker weist eine untere Membran mit einer Wirkfläche und eine Zuluftbohrung auf. Die Diagnose wird erleichtert, wenn die Zuluftbohrungsquerschnittsfläche im Verhältnis zur Wirkfläche der unteren Membran möglichst groß gestaltet ist. Dieses Verhältnis beträgt vorzugsweise zwischen 0,09 und 0,27, bevorzugt zwischen 0,16 und 0,26. Dadurch wird der Unterschied zwischen den Druckverhältnissen im Luftleistungsverstärker beim Zuluft- bzw. bei Abluftbetrieb möglichst groß, so dass die gemessenen Effekte möglichst deutlich zu Tage treten.

Die Diagnose wird aus denselben Gründen weiter erleichtert, wenn der Luftleistungsverstärker eine Zusatzfeder für den Doppelkegel aufweist, welche den Doppelkegel in die Zuluftbohrung drückt, welche möglichst stark ausgeführt ist. Diese Zusatzfeder sorgt dafür, dass der Doppelkegel im Auslieferungszustand bzw. im drucklosen Betriebszustand in seiner richtigen Position verbleibt.

Die grundsätzliche Kalibration wird verbessert, wenn das System ausgangsseitig des Luftleistungsverstärkers eine Drossel oder einen Durchflussregler hat, wodurch eine Grundleckage gewährleistet wird. Diese hat einen vordefinierten Wert, der immer vorausgesetzt werden kann.

Die Aufgabe wird des Weiteren gelöst durch einen Stellungsregler für ein pneumatisch angetriebenes Stellventil mit einem System, wie es oben beschrieben wurde.

Die Aufgabe wird außerdem gelöst durch ein pneumatisch angetriebenes Stellventil mit einem vorgenannten Stellungsregler, und auch durch eine prozesstechnische Anlage mit mindestens einem vorgenannten pneumatisch angetriebenen Stellventil.

Die Aufgabe wird zudem gelöst durch ein Computerprogramm, umfassend Befehle, die bewirken, dass die oben genannte Vorrichtung oder das oben beschriebene System oder der oben genannte Stellungsregler die weiter oben beschriebenen Verfahrensschritte ausführt.

Die Aufgabe wird schließlich gelöst durch ein computerlesbares Medium, auf dem das vorgenannte Computerprogramm gespeichert ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine schematische Schnittansicht durch einen Doppelkegel-Luftleistungsverstärker mit Zusatzfeder im Haltebetrieb (Stand der Technik);

Fig. 2    eine schematische Schnittansicht durch einen Doppelkegel-Luftleistungsverstärker ohne Zusatzfeder im Zuluftbetrieb (Stand der Technik);

Fig. 3    eine schematische Schnittansicht durch einen Doppelkegel-Luftleistungsverstärker ohne Zusatzfeder im Abluftbetrieb (Stand der Technik);

Fig. 4    Kennlinien eines Doppelkegel-Luftleistungsverstärkers;

Fig. 5    eine vereinfachte schematische Schaltskizze der Positionsregelung eines Stellventils;

Fig. 6    eine Ist-Wert-Kurve bei einem Abwärtssprung des Soll-Wertes bei einer ersten, geringen Leckage;

Fig. 7    eine Ist-Wert-Kurve bei einem Abwärtssprung des Soll-Wertes bei einer zweiten, höheren Leckage; und

Fig. 8    zwei Ist-Wert-Kurven zu einem Abwärtssprung des Soll-Wertes bei unterschiedlichen Versorgungsdrücken.

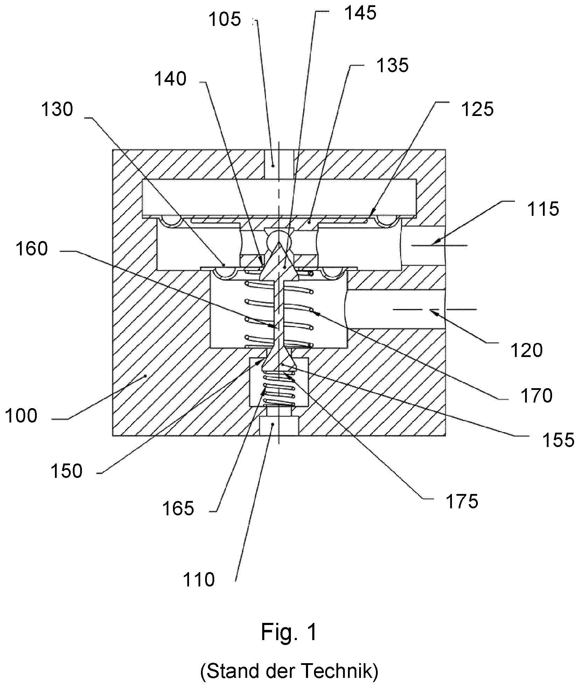

Zunächst soll anhand der Figuren 1 bis 3 die Funktionsweise eines Doppelkegel-Luftleistungsverstärkers erklärt werden. Hierbei handelt es sich um Stand der Technik, der nicht beansprucht wird, aber zum besseren Verständnis erläutert werden muss.

Fig. 1 zeigt den Aufbau eines Doppelkegel-Luftleistungsverstärkers 100. Dieser hat einen Steuereingang 105 für den Steuerdruck $P_{st}$, einen Zulufteingang 110, der mit Druckluft mit dem Druck $P_z$ versorgt wird, einen Entlüftungsausgang 115, der zur Umgebung hin offen ist, und einen Ausgang 120 für Druckluft mit dem gewünschten Ausgangsdruck $P_a$.

Zwischen dem Steuereingang 105 und dem Entlüftungsausgang 115 befindet sich eine erste Membran 125 mit der Wirkfläche $A_o$, und zwischen dem Entlüftungsausgang 115 und dem Ausgang 120 befindet sich eine zweite Membran 130 mit der Wirkfläche $A_u$. Die Wirkfläche der jeweiligen Membran wird ungefähr durch die Mitte der Wülste der Membran begrenzt. Diese beiden Membranen sind durch einen Steuerkörper 135 verbunden, so dass sie sich gemeinsam bewegen. Der Steuerkörper 135 enthält in seiner Mitte den Abluftsitz 140, der durch den Abluftkegel 145 verschlossen bzw. freigegeben wird.

Zwischen Zulufteingang 110 und Ausgang 120 befindet sich der Zuluftsitz 150 mit der Querschnittsfläche $A_z$, der durch den Zuluftkegel 155 verschlossen bzw. freigegeben wird. Zuluft- und Abluftkegel 155, 145 sind fest miteinander verbunden, so dass sie sich stets gemeinsam bewegen, und bilden zusammen den Doppelkegel 160. Dieser kann mittels einer Zusatzfeder 165 vorgespannt sein, dies ist aber nicht unbedingt erforderlich.

Außerdem ist noch eine Offsetfeder 170 vorhanden, welche den Steuerkörper 135 und die beiden Membranen 125, 130 in Fig. 1 nach oben drückt und dafür sorgt, dass der Luftleistungsverstärker erst ab einem gewissen minimalen Steuerdruck, der die Kraft der Offsetfeder 170 überwindet, zu arbeiten beginnt. Die Offsetfeder 170 unterstützt auch ein sicheres Entlüften für den Fall, dass das Vorsteuersystem, welches den Steuerdruck liefert, nicht vollständig entlüften kann (dies ist z.B. bei konventionellen Düse-Prallplatte IP-Wandlern häufig der Fall). Ferner ist noch die untere Wirkfläche 175 des Doppelkegels zu erkennen. Deren Bedeutung wird weiter unten erläutert.

In Fig. 1 ist der Luftleistungsverstärker im Haltebetrieb dargestellt. Das bedeutet, dass Steuerdruck $P_{st}$ und Ausgangsdruck $P_a$ genau so groß sind, dass die erste und zweite Membran 125, 130 sowie der sie verbindende Steuerkörper 135 sich in einer mittleren Position befinden, in der sowohl der Zuluftsitz 150 als auch der Abluftsitz 140 durch den Doppelkegel 160 verschlossen sind. Deshalb liegt keine Fluidverbindung zwischen dem Ausgang 120 und dem Zulufteingang 110 oder dem Entlüftungsausgang 115 vor, so dass der Ausgangsdruck $P_a$ gehalten wird. In der Praxis ist dieser Zustand (Haltebetrieb) selten von Bedeutung, da pneumatische Verbraucher immer eine gewisse Grundleckage aufweisen und ein geregelter Luftleistungsverstärker somit zum Halten eines Zustands des Verbrauchers auf Dauer in den Zuluftbetrieb gehen muss.

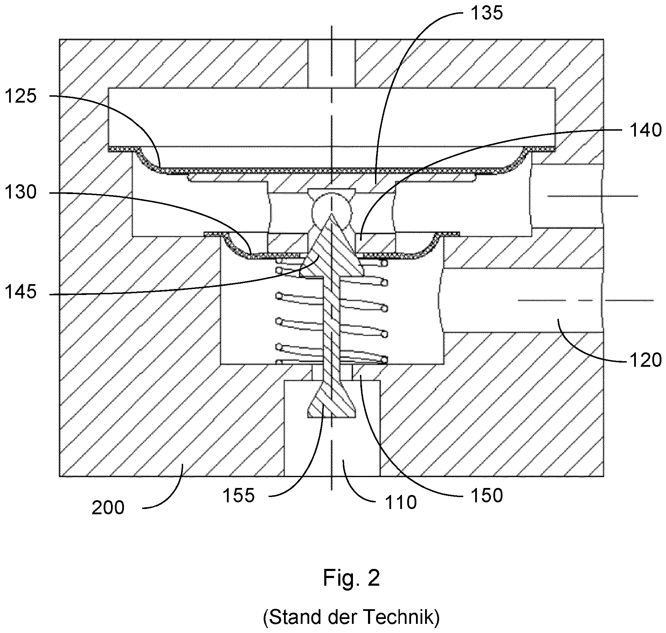

In Fig. 2 ist ein Doppelkegel-Luftleistungsverstärker 200 dargestellt, der sich von dem aus Fig. 1 lediglich durch das Fehlen der Zusatzfeder 165 unterscheidet. In Fig. 2 befindet sich der Luftleistungsverstärker im Zuluftbetrieb. Der Steuerdruck $P_{st}$ ist erhöht, der Ausgangsdruck $P_a$ aber noch nicht, weshalb die beiden Membranen 125, 130 sowie der Steuerkörper 135 nach unten gedrückt werden. Deshalb bleibt der Abluftsitz 140 durch den Abluftkegel 145 verschlossen, der Zuluftkegel 155 wird aber nach unten aus dem Zuluftsitz 150 gedrückt, so dass Druckluft vom Zulufteingang 110 nachströmen kann und den Ausgangsdruck $P_a$ am Ausgang 120 erhöht.

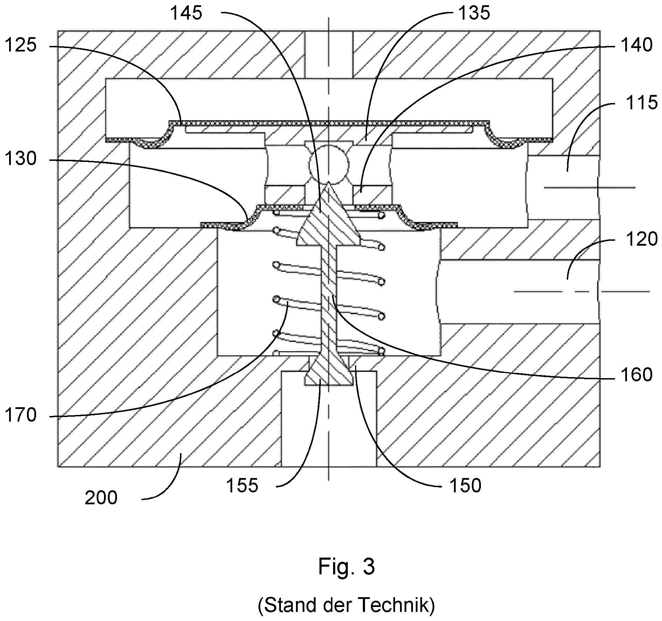

Fig. 3 zeigt denselben Doppelkegel-Luftleistungsverstärker 200 wie Fig. 2, allerdings im Abluftbetrieb. Der Steuerdruck $P_{st}$ ist abgesenkt, so dass die Offsetfeder 170 und der Ausgangsdruck $P_a$, unter dem sich die Druckluft im Verbraucher befindet, die beiden Membranen 125, 130 und den Steuerkörper 135 nach oben drücken. Deshalb wird der Zuluftsitz 150 durch den Zuluftkegel 155 verschlossen, der Abluftsitz 140 durch den Abluftkegel 145 aber freigegeben, da der Abluftsitz 140 mit angehoben wird, der Abluftkegel 145 als Teil des Doppelkegels 160 aber nicht folgen kann, da er mit dem Zuluftkegel 155 verbunden ist. In der Folge entweicht Druckluft aus dem Verbraucher durch den Abluftausgang 115, so dass der am Ausgang 120 anliegende Ausgangsdruck $P_a$ sinkt.

Durch Variation des Steuerdrucks $P_{st}$ kann der Ausgangsdruck $P_a$ auf jeden beliebigen Wert zwischen dem Umgebungsdruck und dem Zuluftdruck $P_z$ gebracht werden.

Zum besseren qualitativen und quantitativen Verständnis seien im Folgenden die zugehörigen Gleichungen hergeleitet. Betrachtet man den ausgeregelten Zustand, gilt ein Kräftegleichgewicht für den Steuerkörper 135. Ohne Berücksichtigung weiterer Kräfte gilt:

$$P_{st} \cdot A_o \;=\; P_a \cdot A_u$$

Für eine genauere Beschreibung muss zusätzlich die Kraft $F_z$ der Zusatzfeder 165 (falls vorhanden) sowie die effektive Kraft auf die untere Wirkfläche 175 des Doppelkegels 160 $A_z$, welche dem Querschnitt des Zuluftsitzes 150 entspricht, berücksichtigt werden, allerdings nur im Zuluftbetrieb. Im Abluftbetrieb stützen sich diese Kräfte über den Zuluftsitz 150 auf das Gehäuse ab und werden von diesem aufgenommen. Die Kraft $F_{offset}$ der Offsetfeder 170 muss hingegen immer berücksichtigt werden. Es ergeben sich folglich unterschiedliche Kräftegleichgewichte für den Zuluft- und den Abluftbetrieb:

Zuluftbetrieb:

$$P_a \cdot A_u + F_{\text{offset}} + P_z \cdot A_z + F_z = P_{st} \cdot A_o$$

Abluftbetrieb:

$$P_a \cdot A_u + F_{\text{offset}} = P_{st} \cdot A_o$$

Dabei werden die Federkräfte $F_z$ und $F_{\text{offset}}$ in erster Näherung als konstant angenommen, da sich der Doppelkegel 160 und der Steuerkörper 135 typischerweise nur über geringe Distanzen bewegen.

Für den Ausgangsdruck gilt somit:

im Zuluftbetrieb:

$$P_a = \frac{P_{st} \cdot A_o - P_z \cdot A_z - F_{\text{offset}} - F_z}{A_u}$$

im Abluftbetrieb:

$$P_a = \frac{P_{st} \cdot A_o - F_{\text{offset}}}{A_u}$$

Bei gleichem Steuerdruck ist der Ausgangsdruck im Zuluftbetrieb also gegenüber dem Abluftbetrieb vermindert. Die Minderung hängt vom Querschnitt $A_z$ des Zuluftsitzes 150, der Stärke der Zusatzfeder 165 und vom Zuluftdruck $P_z$ ab. Konkret gilt für die Minderung:

$$P_{a,\,\text{Abluft}} - P_{a,\,\text{Zuluft}} = \frac{P_z \cdot A_z + F_z}{A_u}$$

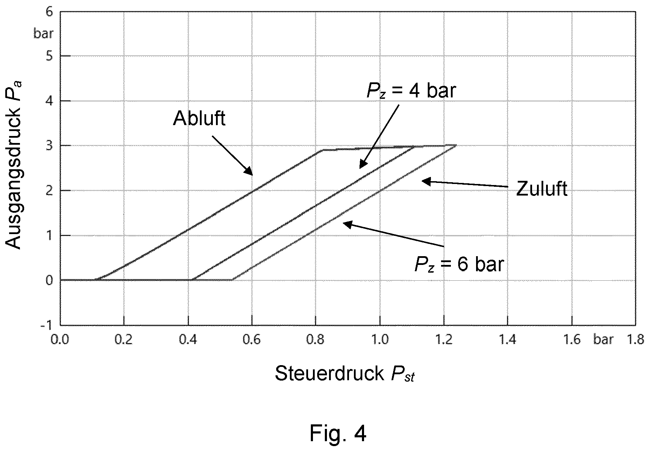

In Fig. 4 sind simulierte Kennlinien eines Doppelkegel-Luftleistungsverstärkers zu sehen. Reale Kennlinien können z.B. dadurch erhalten werden, dass der Steuerdruck (ohne Regelung) langsam rauf- und runtergefahren wird. Der Steuerdruck $P_{st}$ ist auf der x-Achse aufgetragen und variiert in diesem Beispiel zwischen 0 und etwas über 1,2 bar. Der Ausgangsdruck $P_a$ des Luftleistungsverstärkers ist auf der y-Achse aufgetragen und liegt zwischen 0 und 3 bar. Bedingt durch die Übergänge vom Zuluft- zum Abluftbetrieb (oben) bzw. umgekehrt vom Abluft- zum Zuluftbetrieb (unten) erhält man einen hystereseartigen Verlauf der Kennlinien. Die im Diagramm links verlaufende Kennlinie entspricht dem Abluftbetrieb. Die mittlere Kennlinie entspricht dem Zuluftbetrieb bei einem Zuluftdruck von 4 bar, die rechte Kennlinie entspricht dem Zuluftbetrieb bei einem Zuluftdruck von 6 bar. Die Breite und äquivalent dazu die Höhe der Hysterese ist also vom Versorgungsdruck abhängig. Dies kann z.B. bei der Initialisierung eines Luftleistungsverstärkers zur Bestimmung eines unbekannten Versorgungsdrucks an der Zuluftleitung genutzt werden. Es gilt nämlich nach der obigen Gleichung für die Minderung:

$$\text{Höhe der Hysterese} = \frac{P_z \cdot A_z + F_z}{A_u},$$

also

$$P_z = \frac{\text{Höhe der Hysterese} \cdot A_u - F_z}{A_z}.$$

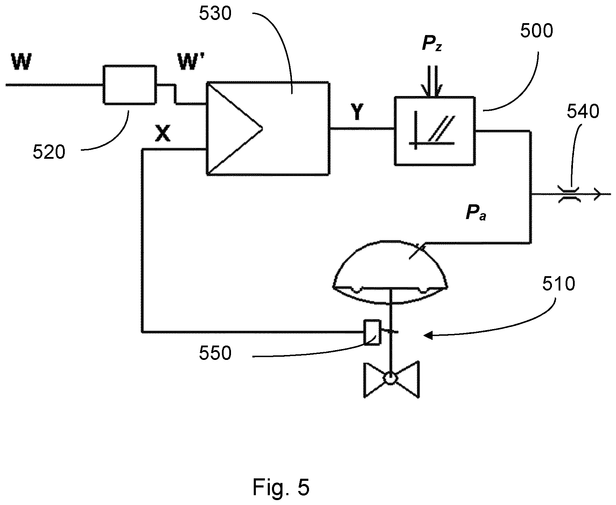

Fig. 5 zeigt schematisch die Schaltung des Positionsregelkreises eines pneumatisch angetriebenen Stellventils 510, die einen typischen Anwendungsfall für einen Doppelkegel-Luftleistungsverstärker 500 bildet. Der Sollwert *W* wird vom Anwender oder von einer Prozess-Steuerung o.ä. vorgegeben. Über einen Führungsvorfilter 520 wird eine lineare Korrektur zum korrigierten Sollwert *W'* vorgenommen. Hierdurch wird die bei dem hier verwendeten P-Regler 530 stets auftretende bleibende Regelabweichung kompensiert, so dass - zumindest im Zuluftbetrieb - der vorgegebene Sollwert VV auch tatsächlich der im ausgeregelten Zustand eingenommenen Position des Stellventils entspricht. Das - typischerweise elektrische - Regelsignal Y des Reglers 530 wird durch einen IP-Wandler (zur Vereinfachung nicht dargestellt) in einen Steuerdruck Y umgewandelt, der am Steuereingang des Luftleistungsverstärkers 500 anliegt. Der Luftleistungsverstärker wird mit einem Zuluftdruck $P_z$ versorgt und liefert in der bereits beschriebenen Weise einen Ausgangsdruck $P_a$ an den Antrieb des Stellventils 510. Die im Druckluftsystem vorhandene Leckage 540 ist dazwischen schematisch angedeutet. Hierbei kann es sich auch um eine vorzugsweise eingebaute Drossel handeln, die eine feste Mindestleckage vorgibt. Der Positionssensor 550 am Stellventil 510 liefert zu dem jeweiligen (korrigierten) Soll-wert *W'* den Ist-Wert *X* an den Regler 530.

Im Folgenden werden die Übertragungsfunktionen und Regelparameter genauer betrachtet, um das Umsteuerverhalten bei einer reinen Proportionalregelung darzustellen. Die Übertragungsfunktion des P-Reglers 530 ist

$$Y = K_P \cdot (W' - X),$$

mit $K_P$ als Verstärkungsfaktor des P-Reglers. Der Verstärkungsfaktor $K_P$ des P-Reglers wird bei der Inbetriebnahme festgelegt, wobei $K_P$ möglichst hoch sein soll, um eine möglichst wirksame Regelung zu erhalten, aber nicht so hoch, dass es zum Überschwingen der Regelung kommt. Ein typischer normaler, nicht reduzierter Wert ist ca. 30.

Die Übertragungsfunktion des Führungsvorfilters ist

$$W' = a_1 \cdot W + b_1.$$

Die Parameter werden bei der Inbetriebnahme, nach Festlegung von $K_P$, fest eingestellt, so dass im ausgeregelten Zustand, wenn der Luftleistungsverstärker im Zuluftbetrieb ist, ein Sollwert *W* = 0 auch tatsächlich einer Position *X* = 0 des Verbrauchers entspricht, und ebenso *X* = 100 % erreicht wird, wenn *W* = 100 % ist. Diese Einstellung erfolgt entweder manuell oder automatisch bei einem Initialisierungslauf.

Für die Diagnose wird vorzugsweise eine niedrigere Verstärkung $K_P$ eingestellt, um die Genauigkeit der Diagnose zu erhöhen. Ein typischer Wert ist hier z.B. $K_P$ = 10. Die Parameter $a_1$ und $b_1$ des Führungsvorfilters können vorzugsweise für die Diagnose passend zu diesem reduzierten $K_P$ ermittelt werden.

Drei weitere Übertragungsfunktionen werden noch benötigt:

$$P_a = a_2 \cdot Y + b_2$$

Luftleistungsverstärker im Zuluftbetrieb,

$$P_a = a_3 \cdot Y + b_3 = a_2 \cdot Y + b_3$$

Luftleistungsverstärker im Abluftbetrieb und

$$X = a_4 \cdot P_a + b_4$$

Verbraucher, z.B. Stellventil.

Die Parameter $a_2$, $b_2$, $a_3$, $b_3$ des Luftleistungsverstärkers sind typischerweise bereits bekannt und ergeben sich aus den Daten des Luftleistungsverstärkers, wie in Fig. 4 dargestellt. Wie in Fig. 4 zu erkennen ist, sind die Kennlinien für den Zuluft- und den Abluftbetrieb im Wesentlichen parallel und lediglich etwas verschoben. Daher ist $a_2 = a_3$ und die Übertragungsfunktionen unterscheiden sich lediglich in den Parametern $b_2$ und $b_3$.

Dabei gilt nach den obigen Herleitungen:

$$b_3 - b_2 = \frac{P_z \cdot A_z + F_z}{A_u}$$

Die Parameter des Verbrauchers sind ebenfalls aus der Spezifikation des Verbrauchers bekannt und fest vorgegeben. Bei einem Stellventil können beispielsweise der Mindestdruck im Antrieb, bei dem die Null-Position verlassen wird, sowie der Druck, bei dem die maximale Position erreicht wird, zur Festlegung herangezogen werden.

Für den Ist-Wert, z.B. die Position des Verbrauchers, ergibt sich durch Einsetzen von $P_a$ und $Y$ in die Gleichung für $X$ und Auflösen nach $X$ im Zuluftbetrieb:

$$X_Z = \frac{a_2 \cdot a_4 \cdot K_P \cdot W' + b_2 \cdot a_4 + b_4}{1 + a_2 \cdot a_4 \cdot K_P}.$$

Im Abluftbetrieb gilt entsprechend

$$X_A = \frac{a_2 \cdot a_4 \cdot K_P \cdot W' + b_3 \cdot a_4 + b_4}{1 + a_2 \cdot a_4 \cdot K_P}.$$

Der Verbraucher $X$ nimmt also im Zuluft- und im Abluftbetrieb bei gleichem (für den Zuluftbetrieb korrigierten) Sollwert $W'$ eine unterschiedliche Position ein. Die Differenz dieser Positionen ist die Umsteueramplitude $U$:

$$U = X_A - X_Z = \frac{(b_3 - b_2) \cdot a_4}{1 + a_2 \cdot a_4 \cdot K_P}.$$

Hier zeigt sich, dass diese Umsteueramplitude $U$ bei kleinerem Verstärkungsfaktor $K_P$ des Reglers größer wird, da $K_P$ im Nenner steht. Setzt man für $(b_3 - b_2)$ das oben erzielte Ergebnis ein, so erhält man:

$$U = \frac{(P_z \cdot A_z + F_z) \cdot a_4}{A_U \cdot (1 + a_2 \cdot a_4 \cdot K_P)}.$$

Man erkennt, dass sich die Umsteueramplitude $U$ - neben einer Verringerung von $K_P$ - auch dadurch vergrößern lässt, dass der Zuluftdruck $P_z$ oder das Flächenverhältnis $A_z/A_u$ vergrößert werden.

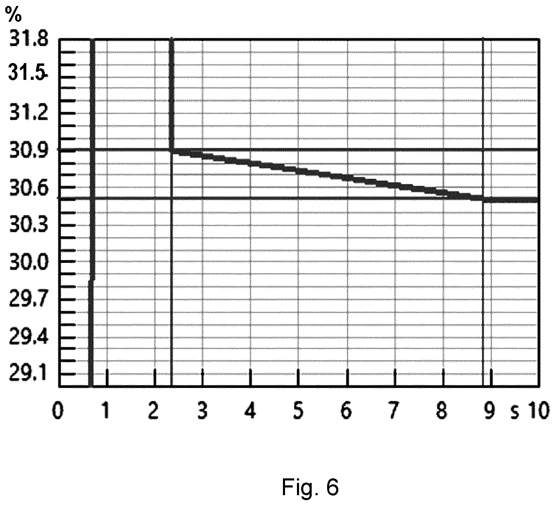

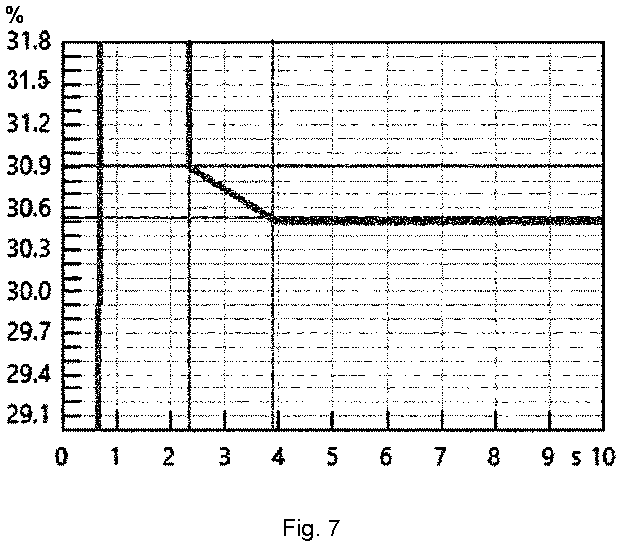

Die Figuren 6, 7 und 8 zeigen simulierte zeitliche Verläufe des Ist-Wertes $X$ bei einem Abwärtssprung des Soll-Wertes $W$ bzw. $W'$ der Regelung eines Doppelkegel-Luftleistungsverstärkers mit Proportionalregelung. Als zu regelnde Größe kann der Druck im Verbraucher dienen (also der Ausgangsdruck $P_a$), oder beispielsweise die Position, falls der Verbraucher z.B. ein Ventil ist. Der fast senkrechte Anstieg innerhalb der ersten Sekunde ist dabei dem Aufbau der Simulation geschuldet. Kurz nach der zweiten Sekunde erfolgt der Abwärtssprung des Soll-Wertes $W$ bzw. $W'$. In Figs. 6 und 7 sinkt der Soll-Wert dabei auf etwa 30,5 %. Der Luftleistungsverstärker geht in den Abluftbetrieb über, wodurch der Druck im Verbraucher schnell absinkt, so dass der Ist-Wert fast senkrecht auf ungefähr 30,9 % fällt. Der Soll-Wert wird im Abluftbetrieb jedoch nicht erreicht, da die P-Regelung eine bleibende Regelabweichung hat und der Führungsvorfilter die Regelabweichung nur für den Zuluftbetrieb kompensiert. Bedingt durch Leckage sinkt der Druck im Verbraucher langsam weiter ab, bis der Luftleistungsverstärker in den Zuluftbetrieb übergeht und ein weiteres Absinken des Drucks verhindert. Ist ein Führungsvorfilter vorhanden, der wie bereits beschrieben die bleibende Regelabweichung des Proportionalreglers für den Zuluftbetrieb ausgleicht, so entspricht der Ist-Wert, der letztlich erreicht wird, dem eingestellten Soll-Wert. Es entsteht ein Verlauf mit zwei Knickpunkten, die in den Figuren 6, 7 und 8 deutlich zu erkennen sind. Die Differenz zwischen den Ist-Werten an den beiden Knickpunkten entspricht der Umsteueramplitude U. Bei höherer Leckage erfolgt das weitere Absinken des Ist-Wertes schneller, die Umsteuerdauer, d.h. der zeitliche Abstand der beiden Knickpunkte, ist also kürzer. Ein Vergleich von Fig. 6 und Fig. 7 zeigt dies deutlich.

Um also eine erhöhte Leckage im Druckluftsystem festzustellen, kann man folgendermaßen vorgehen: Bei Inbetriebnahme werden nicht nur sämtliche Einstellungen und Festlegungen von Parametern vorgenommen, wie bereits beschrieben, sondern es wird auch ein Abwärtssprung des Sollwerts initial ausgemessen. Dazu müssen ggf. vorhandene I- und/oder D-Anteile der Regelung vor dem Ausmessen des Abwärtssprungs abgeschaltet werden, um sicherzustellen, dass eine reine Proportionalregelung vorliegt, da andere Regelanteile durch ihr dynamisches Verhalten das Umsteuerverhalten verfälschen könnten. Dies ist unproblematisch, da die entsprechenden Anteile der Regelung im Anschluss wieder eingeschaltet werden können, so dass nur kurzzeitig eine weniger genaue Regelung stattfindet. Vorzugsweise wird zum initialen Ausmessen eines Abwärtssprungs auch der Verstärkungsfaktor $K_P$ vorübergehend auf einen niedrigeren Wert eingestellt, da hierdurch die zu messenden Effekte wie bereits beschrieben vergrößert werden. Der zeitliche Verlauf des Ist-Wertes beim Abwärtssprung wird aufgenommen, und aus der erhaltenen Kurve (ggf. geglättet) werden die Differenzen der beiden Knickpunkte bestimmt, also die Umsteueramplitude und die Umsteuerdauer. Diese beiden Werte und auch der niedrigere Verstärkungsfaktor werden als Referenzwerte gespeichert.

Zu einem beliebigen späteren Zeitpunkt kann dann erneut ein Abwärtssprung des Soll-Wertes ausgemessen werden. Dieser muss nicht explizit zu Diagnosezwecken ausgelöst werden, sondern es kann einfach abgewartet werden, bis z.B. betriebliche Anforderungen einen solchen Abwärtssprung sowieso erfordern. Für diesen Abwärtssprung werden dann ebenfalls nicht-proportional-Anteile der Regelung abgeschaltet und derselbe niedrigere Verstärkungsfaktor $K_P$ vorübergehend eingestellt. Der zeitliche Verlauf des Ist-Wertes wird wieder aufgenommen und es werden wieder Umsteueramplitude $U$ und Umsteuerdauer aus den beiden Knickpunkten der Kurve bestimmt. Ist nun die Umsteuerdauer kürzer als der Referenzwert dafür, hat die Leckage des Druckluftsystems zugenommen. Hierfür kann eine Schwelle vorgegeben werden, ab der z.B. eine Warnmeldung ausgegeben wird o.ä., um z.B. eine Wartung vorzusehen.

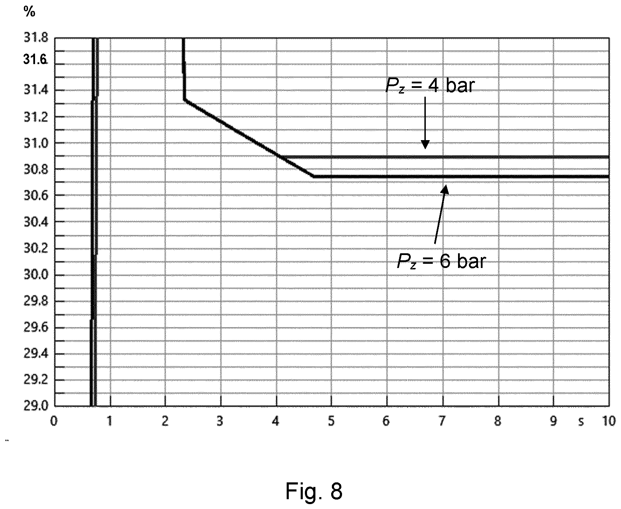

In Fig. 8 sind simulierte zeitliche Verläufe des Ist-Wertes bei einem Abwärtssprung des Soll-Wertes für zwei unterschiedliche Versorgungsdrücke (4 bar bzw. 6 bar) dargestellt. Es ist deutlich zu erkennen, dass die Umsteueramplitude $U$ vom Versorgungsdruck $P_z$ abhängt, wie es sich aus der Formel

$$U = \frac{(P_z \cdot A_z + F_z) \cdot a_4}{A_U \cdot (1 + a_2 \cdot a_4 \cdot K_P)}.$$

ergab. Somit können eventuelle Versorgungsdruckschwankungen überwacht und rückgemeldet werden.

Glossar

Bleibende Regelabweichung

Siehe Proportionalregelung.

Durchflussregler

Ein Durchflussregler ist eine Kombination aus einem Druckminderer und einer Drossel. Ein Durchflussregler ist damit in der Lage, einen definierten Volumenstrom zu gewährleisten. Dadurch kann (innerhalb gewisser Grenzen) verhindert werden, dass der Durchfluss durch die Drossel vom Druck abhängt.

Knickpunkte einer Kurve

Darunter sind Unstetigkeiten der ersten Ableitung der Kurve zu verstehen. Anschaulich äußern diese sich in Sprüngen in der Steigung der Kurve. Bei experimentell ermittelten Kurven ist der Verlauf zuvor zu glätten, um sicherzustellen, dass Schwankungen, Messungenauigkeiten usw. solche Knickpunkte nicht vortäuschen.

Proportionalregelung, Proportionalregler, P-Regler

Bei einem P-Regler ist die Stellgröße Y immer proportional zu der erfassten Regeldifferenz e (Differenz aus Soll- und Ist-Wert). Daraus ergibt sich, dass ein P-Regler ohne Verzögerung auf eine Regeldifferenz reagiert und eine Stellgröße erzeugt, wenn eine solche Abweichung vorliegt. Die Amplitude der Stellgröße hängt ab von der Regeldifferenz e und dem Betrag des Proportionalbeiwertes $K_P$, der auch als Verstärkung bezeichnet wird:

$$Y = K_P \cdot e$$

Die Wirkung von Störgrößen kompensiert ein Regler dadurch, dass er eine entsprechend entgegengerichtete Stellgröße erzeugt. Diese Stellgröße kann ein P-Regler aber nur erzeugen, wenn eine Regelabweichung vorliegt. Bleibende Störungen lassen sich mit einem P-Regler daher niemals vollständig ausregeln, es verbleibt immer eine bleibende Regelabweichung. Ein großes $K_P$ führt durch einen stärkeren Regeleingriff zu kleineren Regelabweichungen. Zu große $K_P$-Werte erhöhen jedoch die Schwingneigung des Regelkreises.

Umsteueramplitude

Dies ist die Ist-Wert-Änderung, die sich durch den Übergang vom Abluftbetrieb in den Zuluftbetrieb ergibt. Erst danach wird bei einem Abwärtssprung des Sollwerts dieser auch erreicht, da die bleibende Regelabweichung für den Zuluftbetrieb durch Voreinstellungen kompensiert wird. Gemessen wird ein langsames "Nachkriechen", das aufhört, wenn der Zuluftbetrieb eingetreten ist.

Bezugszeichen

| 100, 200, 500 | Doppelkegel-Luftleistungsverstärker |
|---|---|
| 105 | Steuereingang |
| 110 | Zulufteingang |
| 115 | Entlüftungsausgang |
| 120 | Ausgang |
| 125 | erste Membran |
| 130 | zweite Membran |
| 135 | Steuerkörper |
| 140 | Abluftsitz |
| 145 | Abluftkegel |
| 150 | Zuluftsitz |
| 155 | Zuluftkegel |
| 160 | Doppelkegel |
| 165 | Zusatzfeder |
| 170 | Offsetfeder |
| 175 | Untere Wirkfläche des Doppelkegels |
| 510 | pneumatisch angetriebenes Stellventil |
| 520 | Führungsvorfilter |
| 530 | P-Regler |
| 540 | Leckage bzw. Drossel |
| 550 | Positionssensor |

zitierte Literatur

zitierte Patentliteratur

EP 1 769 159 B1
US 4,157,656 A
US 4,653,523 A
US 4,825,198 A
WO 2018/035181 A1

**Patentansprüche**

**1.** Verfahren zur Diagnose von zuluftseitigen Druckschwankungen und/oder ausgangsseitigen Leckagen (540) bei einem geregelten Doppelkegel-Luftleistungsverstärker (100; 200; 500),

1.1 wobei der Doppelkegel-Luftleistungsverstärker (100; 200; 500) von einer Regelung (530) mit einem Soll- und einem Ist-Wert einer Regelgröße geregelt wird;
wobei das Verfahren die folgenden Schritte umfasst:
1.2 initiales Ausmessen mindestens eines Abwärtssprungs, wobei das Ausmessen eines Abwärtssprungs Folgendes umfasst:

1.2.1 Abwarten eines Abwärtssprungs des Sollwerts der Regelgröße;
1.2.2 Sicherstellen einer ausschließlich proportionalen Regelung (530);
1.2.3 Aufnehmen des zeitlichen Verlaufs des Ist-Werts der Regelgröße,
1.2.3.1 beginnend mit dem Abwärtssprung des Sollwerts und
1.2.3.2 endend, wenn innerhalb einer vorgegebenen Messgenauigkeit keine Veränderung des Ist-Werts mehr festgestellt wird;
1.2.3.3 wodurch eine Kurve mit zwei Knickpunkten erhalten wird;
1.2.4 Bestimmen einer Umsteueramplitude und / oder einer Umsteuerdauer,

1.2.4.1 wobei die Umsteueramplitude die Differenz der Ist-Werte der Kurve an den beiden Knickpunkten ist;

1.2.4.2 wobei die Umsteuerdauer der zeitliche Abstand der beiden Knickpunkte ist;

1.3 erneutes Ausmessen eines Abwärtssprungs;

1.4 Diagnostizieren eines zuluftseitigen Druckabfalls, wenn die Umsteueramplitude des erneuten Ausmessens um mehr als eine vorgegebene Toleranz kleiner ist als die Umsteueramplitude des initialen Ausmessens;

und/oder

1.5 Diagnostizieren eines zuluftseitigen Druckanstiegs, wenn die Umsteueramplitude des erneuten Ausmessens um mehr als eine vorgegebene Toleranz größer ist als die Umsteueramplitude des initialen Ausmessens;

und/oder

1.6 Diagnostizieren einer erhöhten ausgangsseitigen Leckage (540), wenn die Umsteuerdauer des erneuten Ausmessens um mehr als eine vorgegebene Toleranz kürzer ist als die Umsteuerdauer des initialen Ausmessens.

2. Verfahren nach dem vorhergehenden Anspruch,
   **dadurch gekennzeichnet,**
   **dass** initial mindestens zwei Abwärtssprünge ausgemessen werden, wobei beide Abwärtssprünge bei unterschiedlichen Druckverhältnissen erfolgen.

3. Verfahren nach einem der vorhergehenden Ansprüche,

   wobei die proportionale Regelung (530) mit einer Verstärkung $K_P$ arbeitet,
   **dadurch gekennzeichnet,**
   **dass** die Verstärkung $K_P$ der proportionalen Regelung (530) für das Ausmessen des Abwärtssprungs um mindestens 5% gesenkt wird.

4. Verfahren nach dem vorhergehenden Anspruch,
   **dadurch gekennzeichnet,**

   **dass** nach dem Ausmessen des Abwärtssprungs
   4.1 die Verstärkung $K_P$ der proportionalen Regelung (530) auf den vor dem Ausmessen des Abwärtssprungs vorhandenen Wert eingestellt wird
   und/oder
   4.2 falls die Regelung vor dem Ausmessen des Abwärtssprungs nicht-proportionale Anteile aufwies, diese wieder zugeschaltet werden.

5. Verfahren nach einem der vorhergehenden Ansprüche,
   mit dem weiteren Schritt des Erstellens eines Datenträgers, auf dem die gewonnenen Daten und/oder die Diagnose gespeichert sind.

6. System zur Diagnose von zuluftseitigen Druckschwankungen und/oder ausgangsseitigen Leckagen (540) bei einem geregelten Doppelkegel-Luftleistungsverstärker (100; 200; 500), umfassend

   6.1 einen Doppelkegel-Luftleistungsverstärker (100; 200; 500) und
   6.2 einen Regler (530) zum Regeln einer Regelgröße des Doppelkegel-Luftleistungsverstärkers (100; 200; 500);
   6.2.1 wobei der Regler so konfiguriert ist, dass er als reiner Proportional-Regler (530) arbeiten kann;
   und mit
   6.3 Mitteln zum Aufnehmen eines zeitlichen Verlaufs des Ist-Wertes der Regelgröße;
   6.4 Mitteln zum Bestimmen von zeitlichen Abständen und Abständen zwischen Ist-Werten der Regelgröße;
   6.5 Mitteln zum Ausgeben einer Diagnose; und mit
   6.6 Mitteln, die geeignet sind, die Schritte des Verfahrens nach einem der Verfahrensansprüche auszuführen.

7. System nach dem unmittelbar vorhergehenden Anspruch,

   7.1 wobei der Luftleistungsverstärker (100; 200; 500) eine untere Membran (130) mit einem Wirkdurchmesser und eine Zuluftbohrung (150) aufweist,
   **dadurch gekennzeichnet,**

7.2 dass das Verhältnis von Zuluftbohrungsquerschnittsfläche zur Wirkfläche der unteren Membran (130) zwischen 0,09 und 0,27, bevorzugt zwischen 0,16 und 0,26, beträgt.

8. System nach einem der beiden unmittelbar vorhergehenden Ansprüche,

8.1 wobei der Luftleistungsverstärker (100; 200; 500) eine Zuluftbohrung (150) aufweist,
**dadurch gekennzeichnet,**
8.2 dass der Luftleistungsverstärker (100; 200; 500) eine Zusatzfeder (165) für den Doppelkegel (160) aufweist, welche den Doppelkegel (160) in die Zuluftbohrung (150) drückt.

9. System nach einem der drei unmittelbar vorhergehenden Ansprüche,
**dadurch gekennzeichnet,**
**dass** ausgangsseitig des Luftleistungsverstärkers (100; 200; 500) eine Drossel (540) oder ein Durchflussregler vorhanden ist, wodurch eine Grundleckage gewährleistet wird.

10. Stellungsregler für ein pneumatisch angetriebenes Stellventil (510) mit einem System nach einem der Ansprüche 6 bis 8.

11. Pneumatisch angetriebenes Stellventil (510) mit einem Stellungsregler nach dem unmittelbar vorhergehenden Anspruch.

12. Prozesstechnische Anlage mit mindestens einem pneumatisch angetriebenen Stellventil (510) nach dem unmittelbar vorhergehenden Anspruch.

13. Computerprogramm, umfassend Befehle, die bewirken, dass das System des Anspruchs 6 oder der Stellungsregler des Anspruchs 10 die Verfahrensschritte nach einem der Ansprüche 1 bis 5 ausführt.

14. Computerlesbares Medium, auf dem das Computerprogramm nach dem unmittelbar vorhergehenden Anspruch gespeichert ist.


**Claims**

1. Method for diagnosing supply-air-side pressure fluctuations and/or output-side leaks (540) in a regulated double-cone air power amplifier (100; 200; 500),

1.1 the double-cone air power amplifier (100; 200; 500) being regulated by a closed-loop controller (530) with a setpoint value and an actual value of a regulated variable;
the method comprising the following steps:
1.2 initial measurement of at least one downward step, the measurement of a downward step comprising the following:

1.2.1 waiting for a downward step of the setpoint of the regulated variable;
1.2.2 ensuring an exclusively proportional closed-loop controller (530);
1.2.3 recording the time characteristic of the actual value of the regulated variable,
1.2.3.1 starting with the downward step of the setpoint and
1.2.3.2 ending when no further change in the actual value is detected within a specified measuring accuracy;
1.2.3.3 whereby a curve with two inflection points is obtained;
1.2.4 determining a reversal amplitude and/or a reversal duration,
1.2.4.1 wherein the reversal amplitude is the difference between the actual values of the curve at the two inflection points;
1.2.4.2 wherein the reversal period is the time interval between the two inflection points;
1.3 re-measuring a downward step;
1.4 diagnosing a supply-air-side pressure drop if the reversal amplitude of the re-measuring is smaller than the reversal amplitude of the initial measuring by more than a specified tolerance;
and/or
1.5 diagnosing an increase in supply-air-side pressure if the reversal amplitude of the re-measurement is greater than the reversal amplitude of the initial measurement by more than a predetermined tolerance;

and/or

1.6 diagnosing increased leakage on the output side (540) if the reversal duration of the re-measurement is shorter than the reversal duration of the initial measurement by more than a predetermined tolerance.

2. Method according to the previous claim,
**characterised in that**
at least two downward steps are initially measured, with both downward steps occurring under different pressure conditions.

3. Method according to one of the preceding claims,

with the proportional closed-loop controller (530) operating with a gain $K_P$,
**characterised in that**
the amplification $K_P$ of the proportional closed-loop controller (530) is reduced by at least 5% for measuring the downward step.

4. Method according to the preceding claim,
**characterised in that**

after measuring the downward step
4.1 the amplification $K_P$ of the proportional closed-loop controller (530) is set to the value present before measuring the downward step
and/or
4.2 if the close-loop controller had non-proportional components before the downward step was measured, these are re-enabled.

5. Method according to one of the preceding claims,
comprising the further step of creating a data carrier on which the acquired data and/or the diagnosis are stored.

6. System for diagnosing supply-air-side pressure fluctuations and/or output-side leaks (540) in a regulated double-cone air power amplifier (100; 200; 500), comprising

6.1 a double-cone air power amplifier (100; 200; 500) and
6.2 a closed-loop controller (530) for controlling a regulated variable of the double-cone air power amplifier (100; 200; 500);
6.2.1 the closed-loop controller being configured in such a way that it can operate purely as a proportional controller (530);
and having
6.3 means for recording a time characteristic of the actual value of the regulated variable;
6.4 means for determining time intervals and intervals between actual values of the regulated variable;
6.5 means for outputting a diagnosis; and with
6.6 means which are suitable for carrying out the steps of the method according to one of the method claims.

7. System according to the immediately preceding claim,

7.1 wherein the air power amplifier (100; 200; 500) has a lower membrane (130) with an effective diameter and an air supply bore (150),
**characterised in that**
7.2 the ratio of the cross-sectional area of the air supply bore to the effective area of the lower diaphragm (130) is between 0.09 and 0.27, preferably between 0.16 and 0.26.

8. System according to one of the two immediately preceding claims,

8.1 wherein the air power amplifier (100; 200; 500) has a air supply bore (150),
**characterised in that**
8.2 the air power amplifier (100; 200; 500) has an additional spring (165) for the double cone (160), which spring presses the double cone (160) into the air supply bore (150).

9. System according to one of the three immediately preceding claims,
**characterised in that**
a throttle (540) or a flow controller is provided on the output side of the air power amplifier (100; 200; 500), whereby a basic leakage is ensured.

10. Positioner for a pneumatically driven control valve (510) with a system according to one of claims 6 to 8.

11. Pneumatically driven control valve (510) with a positioner according to the immediately preceding claim.

12. Process plant with at least one pneumatically driven control valve (510) according to the immediately preceding claim.

13. Computer program comprising instructions that cause the system of claim 6 or the positioner of claim 10 to carry out the method steps according to one of claims 1 to 5.

14. Computer-readable medium on which the computer program according to the immediately preceding claim is stored.


**Revendications**

1. Procédé de diagnostic de variations de pression côté alimentation et/ou de fuites côté sortie (540) dans un amplificateur de puissance d'air à double cône régulé (100 ; 200 ; 500),

   1.1 dans lequel l'amplificateur de puissance d'air à double cône (100 ; 200 ; 500) est régulé par une régulation (530) avec une valeur de consigne et une valeur réelle d'une variable réglée ;
   dans lequel le procédé comprend les étapes suivantes :
   1.2 mesure initiale d'au moins un saut descendant, dans laquelle la mesure d'un saut descendant comprend :

      1.2.1 attendre un saut descendant de la consigne de la variable réglée ;
      1.2.2 assurer une régulation exclusivement proportionnelle (530) ;
      1.2.3 enregistrer l'évolution dans le temps de la valeur réelle de la variable réglée,
      1.2.3.1 en commençant par le saut descendant de la consigne, et
      1.2.3.2 se terminant lorsque plus aucune variation de la valeur réelle n'est constatée dans les limites d'une précision de mesure prédéfinie ;
      1.2.3.3 ce qui permet d'obtenir une courbe avec deux points d'inflexion ;
      1.2.4 détermination d'une amplitude d'inversion et/ou d'une durée d'inversion,
      1.2.4.1 dans lequel l'amplitude d'inversion est la différence entre les valeurs réelles de la courbe aux deux points d'inflexion ;
      1.2.4.2 dans lequel la durée d'inversion est l'intervalle de temps entre les deux points d'inflexion
      1.3 mesurer à nouveau un saut descendant ;
      1.4 diagnostic d'une chute de pression côté alimentation, lorsque l'amplitude d'inversion de la nouvelle mesure est inférieure de plus d'une tolérance prédéfinie à l'amplitude d'inversion de la mesure initiale ;
      et/ou
      1.5 diagnostiquer une augmentation de la pression côté alimentation lorsque l'amplitude d'inversion de la nouvelle mesure est supérieure de plus d'une tolérance prédéterminée à l'amplitude d'inversion de la mesure initiale ;
      et/ou
      1.6 diagnostiquer une fuite accrue côté sortie (540) si la durée d'inversion de la nouvelle mesure est plus courte de plus d'une tolérance prédéterminée que la durée d'inversion de la mesure initiale.

2. Procédé selon la revendication précédente,
**caractérisé en ce**
**que** l'on mesure initialement au moins deux sauts descendants, dans lequel les deux sauts descendants sont effectués dans des conditions de pression différentes.

3. Procédé selon l'une quelconque des revendications précédentes,

   dans lequel la régulation proportionnelle (530) fonctionne avec un gain $K_p$,
   **caractérisé en ce**

**que** le gain $K_p$ de la régulation proportionnelle (530) est diminué d'au moins 5% pour la mesure du saut descendant.

4. Procédé selon la revendication précédente,
   **caractérisé en ce**

   **que**, après avoir mesuré le saut descendant
   4.1 le gain $K_p$ de la commande proportionnelle (530) est réglé à la valeur existant avant la mesure du saut descendant
   et/ou
   4.2 si la régulation comprenait des parties non proportionnelles avant la mesure du saut descendant, celles-ci sont à nouveau activées.

5. Procédé selon l'une quelconque des revendications précédentes,
   avec l'étape supplémentaire de création d'un support de données sur lequel sont enregistrées les données obtenues et/ou le diagnostic.

6. Système de diagnostic des variations de pression côté alimentation et/ou des fuites côté sortie (540) dans un amplificateur de puissance d'air à double cône régulé (100 ; 200 ; 500), comprenant

   6.1 un amplificateur de puissance d'air à double cône (100 ; 200 ; 500) et
   6.2 un régulateur (530) pour la régulation d'une variable réglée de l'amplificateur de puissance à air à double cône (100 ; 200 ; 500) ;
   6.2.1 dans lequel le régulateur est configuré de manière à pouvoir fonctionner comme un régulateur purement proportionnel (530) ;
   et comprenant
   6.3 des moyens pour enregistrer une évolution dans le temps de la valeur réelle de la variable réglée ;
   6.4 des moyens pour déterminer les intervalles de temps et les intervalles entre les valeurs réelles de la variable réglée ;
   6.5 des moyens pour émettre un diagnostic ; et avec
   6.6 des moyens aptes à mettre en oeuvre les étapes du procédé selon l'une quelconque des revendications de procédé.

7. Système selon la revendication immédiatement précédente,

   7.1 dans lequel l'amplificateur de puissance d'air (100 ; 200 ; 500) comprend une membrane inférieure (130) ayant un diamètre d'action et un perçage d'alimentation en air (150),
   **caractérisé en ce**
   7.2 que le rapport entre la surface de la section transversale du perçage d'alimentation en air et la surface active de la membrane inférieure (130) est compris entre 0,09 et 0,27, de préférence entre 0,16 et 0,26.

8. Système selon l'une des deux revendications immédiatement précédentes,

   8.1 dans lequel l'amplificateur de puissance d'air (100 ; 200 ; 500) comprend un perçage d'alimentation en air (150),
   **caractérisé en ce**
   8.2 que l'amplificateur de puissance d'air (100 ; 200 ; 500) comprend un ressort supplémentaire (165) pour le double cône (160), qui pousse le double cône (160) dans le perçage d'alimentation en air (150).

9. Système selon l'une des trois revendications immédiatement précédentes,
   **caractérisé en ce**
   **qu'**un étranglement (540) ou un régulateur de débit est présent du côté de la sortie de l'amplificateur de puissance d'air (100 ; 200 ; 500), ce qui garantit une fuite de base.

10. Positionneur pour une soupape de positionnement à commande pneumatique (510) comportant un système selon l'une quelconque des revendications 6 à 8.

11. Soupape de positionnement à actionnement pneumatique (510) avec un régulateur de position selon la revendication immédiatement précédente.

12. Installation de process comprenant au moins une soupape de positionnement (510) à commande pneumatique selon la revendication immédiatement précédente.

13. Programme d'ordinateur comprenant des instructions pour que le système de la revendication 6 ou le positionneur de la revendication 10 exécute les étapes du procédé selon l'une quelconque des revendications 1 à 5.

14. Support lisible par ordinateur sur lequel est enregistré le programme d'ordinateur selon la revendication immédiatement précédente.

Fig. 1

(Stand der Technik)

Fig. 2

(Stand der Technik)

Fig. 3

(Stand der Technik)

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1769159 B1
- WO 2018035181 A1
- US 4157656 A
- US 4653523 A
- US 4825198 A